Europäisches Patentamt

European Patent Office

Office européen des brevets

(11) Numéro de publication : **0 188 457**
**B1**

# (12) FASCICULE DE BREVET EUROPÉEN

(45) Date de publication du fascicule du brevet :
**23.11.89**

(21) Numéro de dépôt : **85903017.3**

(22) Date de dépôt : **25.06.85**

(86) Numéro de dépôt international :
**PCT/FR 85/00174**

(87) Numéro de publication internationale :
**WO/8600451 (16.01.86 Gazette 86/02)**

(51) Int. Cl.⁴ : **G 09 B 11/00**

(54) JEU EDUCATIF POUR STIMULER L'ECRITURE.

(30) Priorité : **28.06.84 FR 8410214**

(43) Date de publication de la demande :
**30.07.86 Bulletin 86/31**

(45) Mention de la délivrance du brevet :
**23.11.89 Bulletin 89/47**

(84) Etats contractants désignés :
**CH DE FR GB IT LI NL SE**

(56) Documents cités :
**EP--A-- 0 097 807**
**GB--A-- 1 124 794**
**GB--A-- 2 106 693**
**US--A-- 4 111 052**
**US--A-- 4 288 537**

(73) Titulaire : **SCHWARTZ, Didier**
**21, rue de Moscou**
**F-75008 Paris (FR)**

(72) Inventeur : **SCHWARTZ, Didier**
**21, rue de Moscou**
**F-75008 Paris (FR)**
Inventeur : **ETIENNE, Jean Marc**
**4, rue de Fontenay**
**F-94130 Nogent-sur-Marne (FR)**

(74) Mandataire : **Poidatz, Emmanuel**
**Cabinet M. SABATIER 83, Avenue Foch**
**F-75116 Paris (FR)**

## Description

### Domaine technique

L'invention a pour objet d'être un jouet éducatif destiné à stimuler l'écriture et le graphisme par l'obtention d'un résultat sonore et visuel immédiat au cours d'un tracé sur papier libre.

Elle permet d'établir un contact ludique stimulant et valorisant entre l'enfant et l'outil de base de l'écriture : stylo-crayon.

Elle est motivée par le fait que les claviers ordinateurs et autres machines à écrire et à dessiner entraînent, par leurs aspects sans cesse plus sophistiqués et ludiques, un désintérêt préoccupant pour l'outil de base stylo-crayon.

Elle est principalement destinée :

1) Aux premières approches de l'enfant dans le domaine du graphisme et de l'écriture-apprentissage ;

2) à la rééducation de l'enfant qui, pour une raison physique ou psychologique, connaît une difficulté dans le domaine de l'écriture et du graphisme.

### Technique antérieure

Il a été proposé notamment dans le brevet US-A-4 288 537 un jouet éducatif pour enfant comportant une sonde manuelle à pointe métallique destinée à coopérer avec une grille de parcours obligés préétablis pour ouvrir ou fermer un circuit électrique associé à une source sonore externe modulable selon les positionnements relatifs de la sonde par rapport aux tracés des parcours obligés préétablis. Un tel jeu d'éveil ne peut toutefois apporter aucune aide à la stimulation d'écriture en raison de la structure même des composants du jeu. D'une part la sonde n'est qu'une pointe sèche sans faculté d'écriture et son remplacement éventuel par une pointe d'écriture interdirait tout contact électrique, en d'autres termes rendraient le jeu inopérant. D'autre part, la pointe est doublement attachée à des composants externes du jeu, d'abord par les fils de connexion électrique, ensuite par les pistes des parcours obligés, ce qui est plutôt défavorable à la stimulation de l'écriture, cette dernière se pratiquant sans contrainte sur papier libre.

On connaît également, par ailleurs, des systèmes destinés à des usages très différents de celui de l'invention utilisant un stylographe ou analogue muni de moyens sensibles à la pression exercée sur la pointe pendant l'écriture. Un tel stylographe, décrit dans la demande de brevet EP-A-0 097 807, comporte plusieurs transducteurs de type piézo-électrique pour générer des signaux représentatifs de la pression d'écriture et d'efforts transversaux sur le corps du stylographe, signaux uniquement destinés à être numérisés puis traités par un calculateur digital externe à des fins de vérification de signatures dans le cadre d'opérations financières. Un tel agencement très sophistiqué, utilisable à titre professionnel, est très loin d'un jouet éducatif pour stimuler l'écriture chez les enfants.

Ainsi donc, aucun des éléments de l'Art antérieur ne divulgue ni ne suggère l'exploitation de signaux engendrés par les variations de pression ou plus généralement les mouvements de la pointe pour créer un phénomène sonore et/ou visuel immédiatement exploité pour stimuler l'utilisateur, à savoir par exemple un enfant apprenant l'écriture. De plus, aucun des éléments de l'Art antérieur ne divulgue ou suggère l'incorporation de tous les constituants du jeu dans un stylographe pour le rendre autonome offrant ainsi à l'enfant une stimulation accrue par la liberté totale de l'écriture.

### Exposé de l'invention

Dans cet esprit, l'invention concerne un jouet éducatif pour stimuler l'écriture, notamment chez l'enfant, caractérisé en ce qu'il comporte un stylographe dont la pointe est solidaire d'un équipage mobile sensible à la pression d'écriture, ledit stylographe comportant un transducteur couplé audit équipage mobile et des moyens connectés audit transducteur pour délivrer à une source sonore et/ou à un moyen d'affichage visuel, par exemple à des cristaux liquides, un signal de modulation dont la fréquence est variable en fonction de la pression d'écriture, ladite source sonore et/ou ledit moyen d'affichage visuel étant également incorporé(s) audit stylographe.

Selon un mode de réalisation particulier de l'invention, les moyens pour délivrer le signal de modulation comportent un convertisseur en fréquence, par exemple du type tension-fréquence.

L'invention est stimulante car l'objet stylo-crayon produit une attraction sonore et/ou visuelle dès qu'il est utilisé.

Elle est valorisante pour l'enfant pratiquant l'écriture et le graphisme car elle engendre dès le premier tracé un résultat immédiat qui suggère à l'enfant que l'écriture et le graphisme ont une répercussion sur l'extérieur, lui faisant par là même prendre conscience de la fonction de communication du langage écrit.

L'objet de la demande apparaîtra plus clairement à la lumière de la description qui va suivre de plusieurs modes de réalisation conformes à son principe, donnée uniquement à titre d'exemple et faite en référence aux dessins annexés dans lesquels :

La figure 1 est une vue schématique d'un jouet éducatif ;

Les figures 2-I et 2-II montrent un stylographe conforme à l'invention, représenté en coupe longitudinale et illustrant son mode de fonctionnement ;

La figure 3 illustre un autre mode de réalisation du stylographe ; et

La figure 4 illustre encore un autre mode de réalisation du stylographe.

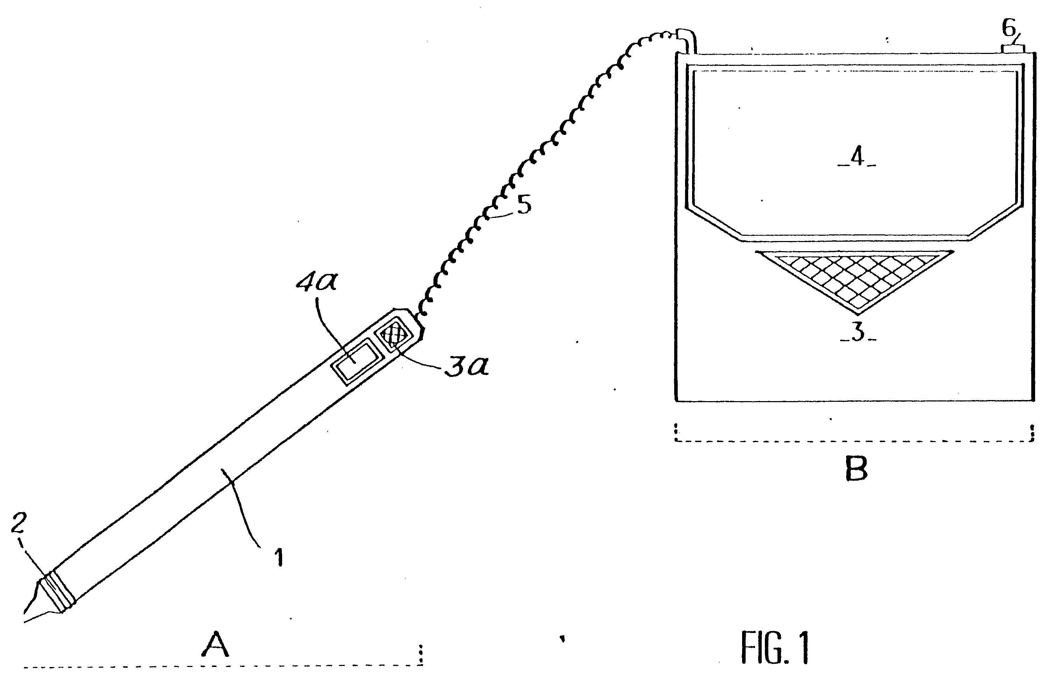

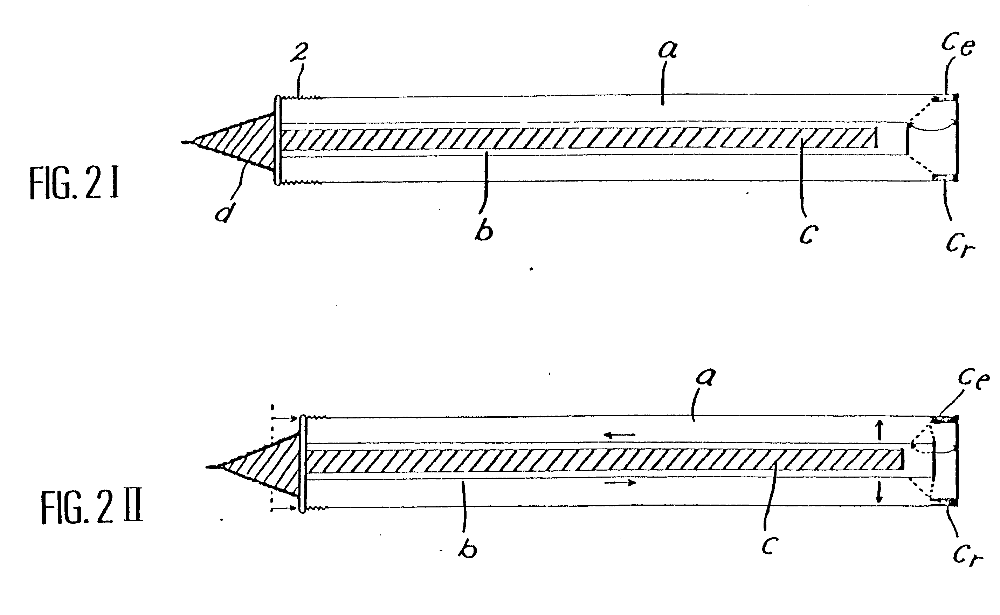

En se reportant à la figure 1, on a représenté un stylographe (1) comprenant un équipage mobile (2) sensible à la pression de l'écriture relié à un dispositif interne (fig. 2) comprenant un transducteur qui convertit les différences de pressions en un signal transformé ensuite en émission sonore (mélodique ou non) émis par émetteur de son incorporé (3a) ou extérieur au stylographe (3) conjointement (ou non) à une représentation visuelle mobile incorporée (4a) notamment à cristaux liquides ou indépendants du stylographe (4).

Dans le cas où la représentation sonore et/ou visuelle est extérieure au stylographe :

La transmission de cette représentation du bloc A au bloc B est assurée par un fil (5) ou tout autre dispositif ne nécessitant pas de fil (infrarouge par exemple).

Pour la fonction pédagogique de l'objet, il peut être intéressant d'y incorporer des moyens d'invalidation commandés par un interrupteur (6) destiné à couper l'émission du signal sonore et/ou à figer la représentation visuelle, si l'enfant n'utilise pas le stylographe comme l'éducateur le lui demande.

Le dispositif permettant de convertir les différences de pression exercées sur le stylographe en signal sonore et visuel peut être, à titre d'exemple, du type représenté figure 2, étant entendu que tout moyen technique équivalent pour assurer cette transmission fait partie intégrante de la demande, dispositif piézo-électrique ou autre.

La figure 2-I représente le stylographe composé de deux tubes cylindriques, le premier (a) au tube externe servant de corps au stylo et comprenant une partie déformable (2) transmettrice des variations de pressions, le deuxième (b) ou tube interne, d'un diamètre inférieur, comprenant la cartouche d'encre (c) et coulissant à l'intérieur du premier (a). Le tube interne porte aussi la pointe (d) dudit stylographe.

Un dispositif composé d'une source lumineuse émettrice (Ce), et d'un récepteur photosensible (Cr) est placé au sommet du stylographe au voisinage de l'extrémité du tube interne (b) ou d'un élément solidaire de celui-ci. L'agencement photosensible peut être remplacé par un dispositif piézo-électrique fixé au tube externe (a) et couplé au tube interne (b) ou inversement.

La figure 2-II représente le stylographe au moment du tracé : le tube (a) subit une pression transmettant au tube (b) un mouvement de translation vertical et latéral qui est interprété par les cellules en tant que variation d'angle ou de section du faisceau émis par (Ce) et recueilli par (Cr). C'est cette variation qui provoque la modulation des signaux sonores et visuels.

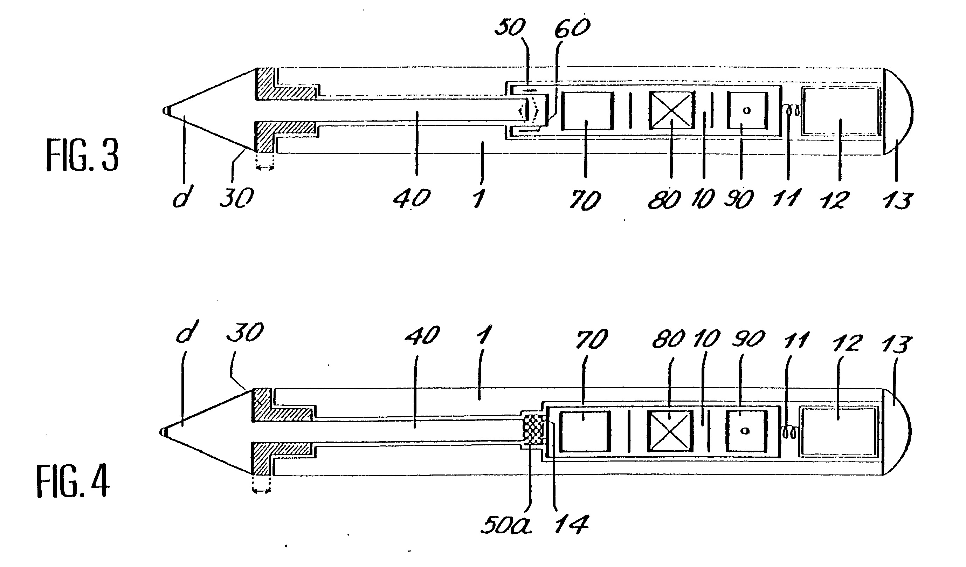

Dans l'exemple de la figure 3, lors du tracé, les pressions exercées sur la pointe d'écriture (d), transmises par le truchement d'un manchon élastique compressible (30), provoquent des mouvements longitudinaux de la cartouche rigide (40) solidaire de la point d'écriture (d).

Ces mouvements longitudinaux de la cartouche rigide masquent partiellement un faisceau infrarouge émis par un émetteur infrarouge pulsé (50) en direction du récepteur infrarouge (60), entraînant des variations de rayonnement reçu. Ces variations sont traduites en signaux électriques par le récepteur (60) et traitées par un convertisseur tension-fréquence (70). Les variations de fréquence ainsi obtenues sont amplifiées par un amplificateur (80) et rendues audibles par l'intermédiaire d'un transducteur sonore (piézo-électrique) (90). L'ensemble (50), (60), (70), (80), (90) est assemblé sur un circuit (10) maintenu à sa place à l'intérieur du corps (1) par le ressort (11) et alimenté par la pile (12). En son extrémité supérieure, le corps (1) est obturé par un bouchon rotatif (13) servant d'interrupteur.

Dans l'exemple de la figure 4, lors de ses déplacements longitudinaux, la cartouche rigide (40) comprime un bloc de mousse synthétique à résistance variable (50a), ce qui entraîne des variations de résistance entre les deux points de contact (14) solidaires du circuit (10). Ces variations de résistance sont traitées par un convertisseur tension-fréquence (70) amplifiées par un amplificateur (80) et rendues audibles par l'intermédiaire du transducteur sonore (90).

**Revendications**

1. Jouet éducatif pour stimuler l'écriture, notamment chez l'enfant, caractérisé en ce qu'il comporte un stylographe dont la pointe est solidaire d'un équipage mobile (2) sensible à la pression d'écriture, ledit stylographe incorporant un transducteur couplé audit équipage mobile et des moyens (70) connectés audit transducteur pour délivrer à une autre source sonore (3) et/ou à un moyen d'affichage visuel (4), par exemple à cristaux liquides, un signal de modulation dont la fréquence est variable en fonction de la pression d'écriture, ladite source sonore (3) et/ou ledit moyen d'affichage visuel (4) étant également incorporé(s) audit stylographe.

2. Jouet éducatif selon la revendication 1, caractérisé en ce que lesdits moyens pour délivrer un signal de modulation comportent un convertisseur en fréquence (70).

3. Jouet éducatif selon la revendication 2, caractérisé en ce que ledit convertisseur (70) est du type tension-fréquence.

4. Jouet éducatif selon l'une des revendications 2 et 3, caractérisé en ce que ledit convertisseur (70) est relié à un transducteur sonore (90) par exemple du type piézo-électrique, éventuellement par l'intermédiaire d'un amplificateur (80).

5. Jouet éducatif selon l'une des revendications précédentes, caractérisé en ce que le stylographe comporte des moyens d'invalidation commandés, incluant par exemple un interrupteur de commande (6) pour couper l'émission du signal sonore et/ou figer la représentation visuelle.

6. Jouet éducatif selon l'une des revendications précédentes caractérisé en ce que ledit stylographe comporte un tube externe (a) formant corps séparé de la pointe solidaire d'un tube interne par une partie déformable (2), ledit tube interne portant une cartouche d'encre ou analogue et se déplaçant à l'intérieur du tube externe en réponse aux déformations de ladite partie déformable et en ce que ledit transducteur est agencé dans ledit tube externe pour être sensible aux mouvements dudit tube interne.

7. Jouet éducatif selon la revendication 6 caractérisé en ce que ledit transducteur comporte une source lumineuse et un récepteur photo-électrique (Cr) placé en regard de ladite source et en ce que l'extrémité dudit tube interne (b) ou un élément solidaire de celui-ci est mobile au voisinage de l'espace séparant ladite source dudit récepteur.

8. Jouet éducatif selon la revendication 6 caractérisé en ce que ledit transducteur consiste en un dispositif piézo-électrique fixé audit tube externe et couplé audit tube interne, ou inversement.

9. Jouet éducatif selon la revendication 6 caractérisé en ce que ledit transducteur consiste en un émetteur infrarouge (30) placé en regard d'un récepteur infrarouge (60) et en ce que l'extrémité dudit tube interne (40) ou un élément solidaire de celui-ci est mobile au voisinage de l'espace séparant ledit émetteur dudit récepteur.

10. Jouet éducatif selon la revendication 6 caractérisé en ce que ledit tube interne portant la pointe est monté dans ledit tube externe avec interposition d'un manchon (30) en matériau élastique.

11. Jouet éducatif selon la revendication 6 ou 10 caractérisé en ce que ledit tube interne est relié à un bloc de mousse synthétique (50a) à résistance variable formant le transducteur précité.

## Claims

1. Educational toy for stimulating writing particularly for children, characterized in that it comprises a stylograph pen whose tip is integral with a mobile assembly (2) sensitive to the writing pressure, said stylograph pen incorporating a transducer coupled to said mobile assembly and means (70) connected to said transducer for delivering to another sound source (3) and/or to visual display means (4), for example comprising liquid crystals, a modulation signal whose frequency is variable as a function of the writing pressure, said sound source (3) and/or said visual display means (4) being also incorporated in said stylograph pen.

2. Educational toy according to claim 1, characterized in that said means for delivering a modulation signal comprise a frequency converter (70).

3. Educational toy according to claim 2, characterized in that said converter (70) is of the voltage-frequency type.

4. Educational toy according to one of claims 2 and 3, characterized in that said converter (70) is connected to a sound transducer (9) for example of the piezoelectric type, possibly through an amplifier (80).

5. Educational toy according to one of the preceding claims, characterized in that the stylograph pen comprises controlled invalidation means, including for example a control switch (6), for cutting off the transmission of the sound signal and/or freezing the visual representation.

6. Educational toy according to one of the preceding claims, characterized in that said stylograph pen comprises an external tube (a) forming a body separate from the tip fast with an internal tube by a deformable portion (2), said internal tube comprising an ink cartridge or similar and moving inside the external tube in response to the deformations of said deformable portion and in that said transducer is fitted in said external tube so as to be sensitive to the movements of said internal tube.

7. Educational toy according to claim 6, characterized in that said transducer comprises a light source and a photoelectric receiver (Cr) placed opposite said source and in that the end of said internal tube (b) or an element integral therewith is movable in the vicinity of the space separating said source from said receiver.

8. Educational toy according to claim 6, characterized in that said transducer consists of a piezoelectric device fixed to said external tube and coupled to said internal tube, or conversely.

9. Educational toy according to claim 6, characterized in that said transducer consists of an infrared transmitter (50) placed opposite an infrared receiver (60) and in that the end of said internal tube (40) or an element integral therewith is movable in the vicinity of the space separating said transmitter from said receiver.

10. Educational toy according to claim 6, characterized in that said internal tube carrying the tip is mounted in said external tube with interpositioning of a resilient material sleeve (30).

11. Educational toy according to claim 6 or 10, characterized in that said internal tube is connected to a block of synthetic foam (50a) with variable resistance forming said transducer.

## Patentansprüche

1. Pädagogisches Spielzeug zum Anregen des Schreibens, insbesondere beim Kind, dadurch gekennzeichnet, daß es einen Stylographen (Schreib- und Zeichenstift) umfaßt, dessen Spitze fest bezüglich eines für den Schreibdruck empfindlichen beweglichen Organs (2) ist, wobei im Stylograph ein Wandler eingebaut ist, der mit diesem beweglichen Organ gekoppelt ist und Einrichtungen (70) mit diesem Wandler verbunden sind, um an eine Schallquelle (3) und/oder eine Sichtbarmachungseinrichtung (4), beispielsweise mit Flüssigkristallen, ein Modulationssignal zu liefern, dessen Frequenz variabel als Funktion des Schreibdrucks ist, wobei die Schallquelle (3) und/oder die Sichtbarmachungseinrichtung (4) auch in den Stylographen eingebaut ist bzw. sind.

2. Pädagogisches Spielzeug nach Anspruch 1, dadurch gekennzeichnet, daß die ein Modulationssignal liefernden Einrichtungen einen Frequenzumsetzer (70) umfassen.

3. Pädagogisches Spielzeug nach Anspruch 2, dadurch gekennzeichnet, daß der Umsetzer (70) vom Spannungs-Frequenztyp ist.

4. Pädagogisches Spielzeug nach einem der Ansprüche 2 und 3, dadurch gekennzeichnet, daß der Umsetzer (70) mit einem Schallwandler (90) beispielsweise vom piezo-elektrischen Typ, gegebenenfalls unter Zwischenschaltung eines Verstärkers (80), verbunden ist.

5. Pädagogisches Spielzeug nach einem der vorhergehenden Ansprüche, dadurch gekennzeichnet, daß der Stylograph gesteuerte Einrichtungen zum Ungültigmachen umfaßt, die beispielsweise einen Steuerschalter (6) einschließen, der das Aussenden des Schallsignals unterbricht und/oder die visuelle Darstellung auflöst.

6. Pädagogisches Spielzeug nach einem der vorhergehenden Ansprüche, dadurch gekennzeichnet, daß dieser Stylograph eine äußere Röhre (a) umfaßt, die ein Gehäuse bildet, das von der fest mit einem Innenrohr verbundenen Spitze durch einen verformbaren Teil (2) getrennt ist, wobei das Innenrohr eine Tintenpatrone oder dergleichen trägt und sich im Inneren des Außenrohres, abhängig von Verformungen dieses verformbaren Teils, verschiebt und daß dieser Wandler im Außenrohr, um empfindlich für die Bewegungen dieses Innenrohres zu sein, ausgebildet ist.

7. Pädagogisches Spielzeug nach Anspruch 6, dadurch gekennzeichnet, daß dieser Wandler eine Lichtquelle und einen fotoelektrischen Empfänger (Cr) umfaßt, der gegenüber dieser Quelle angeordnet ist und daß das Ende dieses Innenrohres (b) oder ein an diesem festes Element benachbart dem diese Quelle vom Empfänger trennenden Raum beweglich ist.

8. Pädagogisches Spielzeug nach Anspruch 6, dadurch gekennzeichnet, daß dieser Wandler aus einer piezo-elektrischen Einrichtung besteht, die am Außenrohr befestigt und mit dem Innenrohr gekoppelt oder umgekehrt ist.

9. Pädagogisches Spielzeug nach Anspruch 6, dadurch gekennzeichnet, daß dieser Wandler aus einem Infrarotsender (50) besteht, der gegenüber einem Infrarotempfänger (60) angeordnet ist und daß das Ende dieses Innenrohres (40) oder ein hierzu festes Elemente beweglich benachbart dem diesen Sender vom Empfänger trennenden Raum ist.

10. Pädagogisches Spielzeug nach Anspruch 6, dadurch gekennzeichnet, daß dieses die Spitze tragende Innenrohr in diesem Außenrohr unter Zwischenschaltung einer Muffe (30) aus elastischem Material montiert ist.

11. Pädagogisches Spielzeug nach Anspruch 6 oder 10, dadurch gekennzeichnet, daß dieses Innenrohr mit einem Block aus synthetischem Schaum (50a) variablen Widerstands, das den genannten Wandler bildet, verbunden ist.

FIG. 1

EP 0 188 457 B1

FIG. 2 I

FIG. 2 II

FIG. 3

50  60

d  30  40  1  70  80 10 90 11 12 13

FIG. 4

d  30  40  1  70  80 10 90 11 12 13

50a  14